(19) Europäisches Patentamt / European Patent Office / Office européen des brevets

(11) **EP 4 156 481 A1**

(12) **EUROPEAN PATENT APPLICATION**

(43) Date of publication:
**29.03.2023 Bulletin 2023/13**

(21) Application number: **22195639.4**

(22) Date of filing: **14.09.2022**

(51) International Patent Classification (IPC):
$H02M\ 1/00$ (2006.01)  $H02M\ 3/07$ (2006.01)
$H02M\ 3/158$ (2006.01)

(52) Cooperative Patent Classification (CPC):
**H02M 1/007; H02M 3/07; H02M 3/158;
H02M 3/1586;** H02M 7/4837

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2021 CN 202111123862**

(71) Applicant: **Silergy Semiconductor Technology
(Hangzhou) Ltd
Zhejiang 310051 (CN)**

(72) Inventors:
• **ZHANG, Zhen**
  **Hangzhou City, Zhejiang Province, 310051 (CN)**
• **ZHANG, Wang**
  **Hangzhou City, Zhejiang Province, 310051 (CN)**
• **SUN, Junyan**
  **Hangzhou City, Zhejiang Province, 310051 (CN)**

(74) Representative: **Viering, Jentschura & Partner
mbB
Patent- und Rechtsanwälte
Am Brauhaus 8
01099 Dresden (DE)**

(54) **POWER CONVERSION MODULE AND POWER CONVERTER**

(57) The present disclosure discloses a power conversion module and a power converter. The power conversion module includes N-level structures. Each of the previous N-1 level structures includes a basic unit, and an i-th level structure includes $2^{i-1}$ balance units. By controlling switching states of switches in each of the basic units and the balance units, when the power conversion module operates in a steady state, a voltage of a flying capacitor in the basic unit is substantially stable, and the output currents of each of the balance units are equal.

The present disclosure retains the advantages of the three-level Buck DC-DC power converter (such as reducing the withstanding voltage of the power switches, and using smaller inductor), and solves the problem that the three-level Buck power converter cannot automatically realize the voltage balance of the flying capacitor. Also, no additional control strategy is needed to ensure the current equalization of each inductor, and a higher voltage conversion ratio can be provided without changing the duty ratio of the balance unit.

FIG. 2

EP 4 156 481 A1

**Description**

**BACKGROUND**

**1. Field of the Disclosure**

The present disclosure relates to the field of power electronics, and more specifically, to a power conversion module and a power converter.

**2. Description of Related Art**

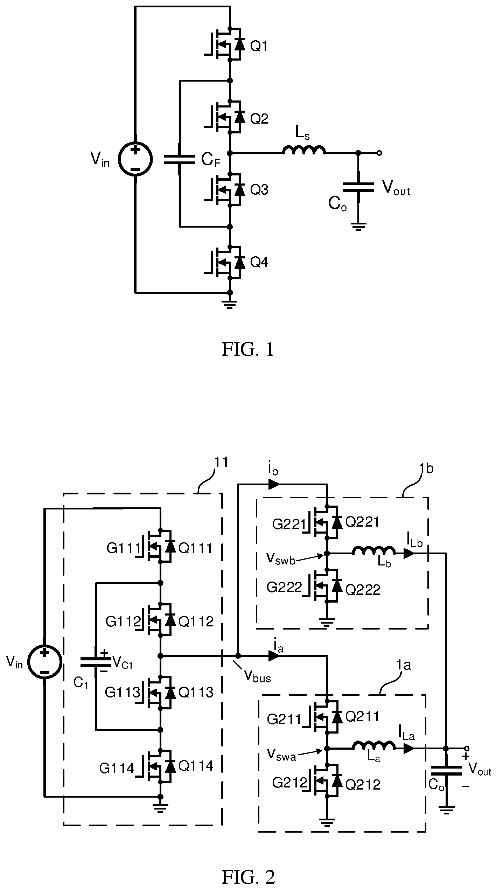

FIG. 1 illustrates three-level Buck DC-DC power converter in the prior art. Compared with the traditional Buck circuit, the withstand voltage of each power transistor is half of the DC bus voltage ($V_{in}/2$), and thus the power transistors with lower withstand voltage levels can be used. Each of the power transistor switches such that a ripple voltage on a inductor is smaller, and a smaller inductor may be used, thereby increasing the power density of the power converter. However, at the same time, the three-level Buck DC-DC power converter cannot automatically achieve the voltage balance of the flying capacitor ($C_F$) due to the working mode of the circuit itself. That is, it cannot automatically achieve the voltage of the flying capacitor ($V_{CF}$) equal to $V_{in}/2$. Therefore, there is a need for sampling the voltage of the flying capacitor ($V_{CF}$) to accomplish the voltage balance of the flying capacitor through an additional control strategy, which complicates the control of the circuit of the three-level Buck DC-DC power converter.
Therefore, how to provide a converter having the advantages of the three-level Buck DC-DC power converter and automatically accomplish the voltage balance for the flying capacitors has become one of the problems to be solved by persons skilled in the art.

**SUMMARY**

In view of this, the present disclosure provides a power converter having advantages of the three-level Buck DC-DC power converter, which can solve the problem that the three-level Buck DC-DC power converter cannot automatically achieve the voltage balance of the flying capacitor.
In one embodiment, the present disclosure provides a power conversion module. The power conversion module comprises an N-level structures, wherein the i-th level structure comprises $2^{i-1}$ basic units, a second terminal of each basic unit in each level structure is respectively connected to first terminals of two basic units in a next level structure; a first terminal of a first basic unit in a first-level structure is used as a first terminal of the power conversion module, wherein N is a natural number greater than or equal to 2, i is a positive integer, and $1 \leq i \leq N-1$.
The N-th level structure comprises $2^{N-1}$ balance units, second terminals of each of the balance units are connected as a second terminal of the power conversion module, and the second terminals of each of the basic units in the (N-1)th level structure are respectively connected to first terminals of two balance units in the Nth level structures
The basic unit is a switched capacitor circuit; by controlling states of power switches in each of the basic units and the balance units, a voltage of a flying capacitor in the basic unit is substantially stable when the power conversion module is in a steady state, and currents flowing through the second terminal of each of the balance units are equal.
Preferably, the balance unit comprises: an inductor and a first power switch and a second power switch sequentially connected in series between the first terminal of the balance unit and a reference ground, a common connection node of the first power switch and the second power switch are connected to one terminal of the inductor, and the other terminal of the inductor is connected to the second terminal of the balance unit.
Preferably, the second power switch is replaced by a diode.
Preferably, the first power switches in two balance units connected to the second terminal of the same basic unit in the (N-1)th level structure are operated under phase-shifted control, with a phase difference of 180°.
Preferably, the duty ratios of the first power switches in each balance unit are the same.
Preferably, the basic unit comprises a flying capacitor and a first power switch, a second power switch, a third power switch and a fourth power switch sequentially connected in series between the first end of the basic unit and a reference ground; the flying capacitor is connected between a first connection node and a second connection node; the first connection node is a common connection node of the first power switch and the second power switch; the second connection node is a common connection node of the third power switch and the fourth power switch; a common connection node of the second power switch and the third power switch is the second terminal of the basic unit.
Preferably, the switching states of the first power switch and the third power switch in each basic unit are the same, and the switching states of the second power switch and the fourth power switch are the same and are complementary to the switching state of the first power switch.
Preferably, the first switch of two basic units in the subsequent structure that are connected to a second terminal of the same basic unit are operated under phase-shifted control, with a phase difference of 180°.

Preferably, the duty ratios of each power switch in each basic unit are 0.5.

Preferably, when the power conversion module is in a steady state, a voltage of the flying capacitor in the jth-level structure is stabilized at $V_{in}/2^j$, where $V_{in}$ is a voltage of the first terminal of the power conversion module, j is a natural number, and $1 \leq j \leq N-1$.

Preferably, the switching frequencies of power switches in the basic unit of the adjacent two level structures satisfies: the switching frequency of the basic unit of previous level is k times or 1/k of the switching frequency of the basic unit of next level, where k is an odd number.

Preferably, the switching frequency of each power switch in the balance unit is an odd multiple of the highest switching frequency of the first level to the (N-1)th level structure.

Preferably, regarding a first power switch in the basic unit in the previous level structure, and turn-on moments of a first power switch in one of the basic unit or the balance unit in the next level structure connected to the basic unit are the same.

Preferably, the first terminal of the power conversion module is an input terminal connected to an external power supply, and the second terminal of the power conversion module is an output terminal.

Preferably, the second terminal of the power conversion module is an input terminal connected to an external power supply, and the first terminal of the power conversion module is an output terminal.

In the second aspect, the present disclosure provides a power converter. The power converter includes a control module and the aforementioned power conversion module. The control module is used to generate driving signals for each power switch in the power conversion module, and control switching states of each power switch in the power conversion module.

Compared with the prior art, the technical solution of the present disclosure has the following advantages:

1. The advantages of three-level Buck DC-DC power converter, such as reducing the withstanding voltage requirements of the power transistors, using smaller power inductors, and improving power density of the power converter, are retained.

2. No additional control strategy is needed to ensure the current equalization of each inductor, which solves the problem that the voltage balance of the flying capacitors cannot be automatically achieved by the Buck power converter with three voltage levels.

3. A higher voltage change ratio may be provided without changing the duty ratio of the balance unit.

## BRIEF DESCRIPTION OF THE DRAWINGS

The above and other objects, features and advantages of the present disclosure will become more clear from the following description of the embodiments of the present disclosure with reference to the accompanying drawings. In the drawings:

FIG. 1 is a schematic structural diagram of a three-level Buck DC-DC power converter in the prior art;

FIG. 2 is a schematic structural diagram of a first example of power conversion module according to an embodiment of the present disclosure;

FIG. 3 is a working waveform schematic of first example operation of the first example power conversion module according to an embodiment of the present disclosure;

FIG. 4 is a working waveform schematic of second example operation of the first example power conversion module according to an embodiment of the present disclosure;

FIG. 5 is a working waveform schematic of third example operation of the first example power conversion module according to an embodiment of the present disclosure;

FIG. 6 is a schematic structural diagram of a second example power conversion module according to an embodiment of the present disclosure;

FIG. 7(a) and FIG. 7(b)is a working waveform schematic of first example operation of the second example power conversion module according to an embodiment of the present disclosure;

FIG. 8(a) and FIG. 8(b) is a working waveform schematic of second example operation of the second example power conversion module according to an embodiment of the present disclosure;

FIG. 9 is a schematic structural diagram of a third example power conversion module according to an embodiment of the present disclosure;

FIG. 10 is a schematic structural diagram of a fourth example power conversion module according to an embodiment of the present disclosure.

## DETAILED DESCRIPTION

The present disclosure is described below based on the following embodiments, but the present disclosure is not limited to these embodiments. In the following detailed description of the invention, some specific details are described in detail. The present disclosure can be fully understood by persons skilled in the art without the description of these detailed parts. Well-known methods, procedures, procedures, components and circuits have not been described in detail in order to avoid obscuring the essence of the present disclosure.

Furthermore, persons with ordinary skill in the art will appreciate that the drawings provided herein are for illustrative purposes and that the drawings are not necessarily drawn to scale.

Meanwhile, it should be understood that in the following description, "circuit" refers to a conductive loop formed by at least one element or sub-circuit through electrical connection or electromagnetic connection. When an element or circuit is referred to as being "connected" to another element or an element/circuit is "connected" between two nodes, it can be coupled or connected to the other element directly or through an intermediate element. The connection between the elements may be physical, logical, or a combination thereof. In contrast, when an element is referred to as being "directly coupled" or "directly connected" to another element, it is meant that there are no intermediate element therebetween.

As shown in FIG. 2, this embodiment firstly discloses a power conversion module including two levels structures, that is, N=2. The first-level structure includes a basic unit 11, the second-level structure includes two balance units 1a and 1b. Second terminals of each balance unit are connected as an output terminal of the power conversion module. A second terminal of the first base unit 11 in the first-level structure is connected to first terminals of the first balance unit 1a and the second balance unit 1b in the second-level structure. The first terminal of the basic unit 11 in the first-level structure is connected to an external power supply as the input terminal of the power conversion module. In the present embodiment, the c-th power switch in the b-th basic unit (or the b-th balance unit) in the a-level structure is represented by $Q_{abc}$, the corresponding driving signal is represented by $G_{abc}$, and each power switch is turned on at a high level and turned off at a low level. For example, the first power switch in the first basic unit (or the first balance unit) in the second-level structure is represented by $Q_{211}$, and the corresponding driving signal is represented by $G_{211}$. When $G_{211}$ is high, Q211 is turned on, and when $G_{211}$ is low, Q211 is turned off.

As an example, as shown in FIG. 2, the balance unit is a Buck circuit, including: an inductor and two power switches sequentially connected in series between an input terminal of the balance unit and a reference ground: a first power switch and a second power switch. common connection node of the first switch and the second power switch is connected to one terminal of the inductor, and the other terminal of the inductor is used as an output terminal of the balance unit. By switching the state of the switch in the balance unit, the inductor can be switched between storing magnetic energy and releasing magnetic energy, so as to maintain the output voltage Vout and the output current of each balance unit.

Furthermore, the switching frequency of each balance unit 1a and 1b is the same, and the first power switch and the second power switch in the same balance unit work in a complementary manner, which is a synchronous rectification mode; the second power switch in each balance unit can also be replaced by a diode for freewheeling. In addition, the duty ratios of the first power switches in each balance unit are the same, and the first power switches in the two balanced units connected to the same basic unit are under phase-shifted control, with a phase difference of 180°. In other words, the power switches Q221 and Q222 are complementarily turned on, the power switches Q211 and Q212 are complementarily turned on, and the duty ratios of the power switches Q221 and Q211 are the same, and the conduction phase differs by 180°.

As an example, as shown in FIG. 2, the basic unit 11 includes a flying capacitor C1 and four switches sequentially connected in series between the first terminal of the basic unit 11 and the reference ground: afirst switch Q111, a power second switch Q112, a power third switch Q113 and a power fourth switch Q114. The flying capacitor C1 is connected between a first connection node and a second connection node; the first connection node is the common connection node of the first power switch Q111 and the second power switch Q112, and the second connection node is the common connection node of the third power switch Q113 and the fourth power switch Q114; the common connection nodes of the second power switch Q112 and the third power switch Q113 are the output end of the basic unit 11. The switching states of the first switch and the third switch in each basic unit are the same, and the switching states of the second switch and the fourth switch are the same and complementary to the switching state of the first switch. That is, the switching states of the first power switch Q111 and the third power switch Q113 in the basic unit 11 are the same, and the switching states of the second power switch Q112 and the fourth power switch Q114 are the same and complementary to the switching state of the first power switch Q111. The duty ratio of the driving signal of each switch in the basic unit 11 is 0.5. By switching the state of the switch in the basic unit 11, the flying capacitor C1 can be switched between the charging state and the discharging state. In the charging state, the flying capacitor C1 is connected in series between the input terminal and the output terminal of the basic unit 11 where the flying capacitor C1 is located; and in the discharge state, the flying capacitor C1 is connected in series between the reference ground and the output terminal of the basic unit 11 where the flying capacitor C1 is located.

It should be noted that the composition of the basic unit 11, the composition of the balance units 1a, 1b, and the relationship between the driving signals of the switches in the structures of all levels are not limited to those listed in this embodiment. It is not listed here one by one. The present disclosure may be satisfied by other composition and driving signal that can realize the voltage balance of the flying capacitors in the basic unit and the current balance of the output currents of each balance unit.

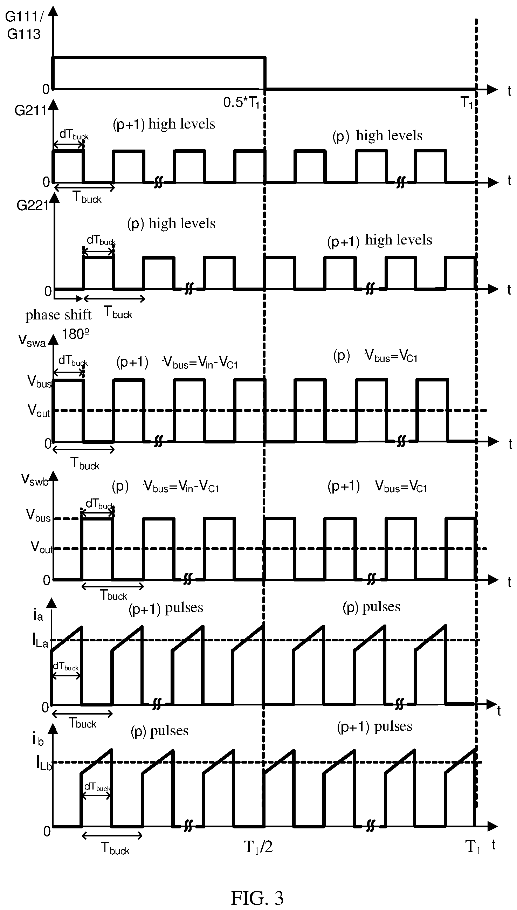

FIG. 3 illustrates the working waveform schematic of first example operation of the first example power conversion module. FIG. 3 shows the waveforms of the driving signals G211, G221 of the first power switches Q211, Q221 of each balance unit and the basic unit 11, the waveforms of voltages $V_{swa}$ and $V_{swb}$ at the common connection node of the two power switches and the waveforms of the currents $i_a$ and $i_b$ flowing into the first terminals of the two balance units, wherein the switching periods (corresponding to the period of the driving signal) of the four power switches G111, G112, G113, and G114 in the basic unit are $T_1$, and the switching frequency (corresponding to the frequency of the driving signal) is $f_1 = 1/T_1$. The switching periods of the power switches in each balance unit are the same as $T_{buck}$, the frequency is $f_{buck} = 1/T_{buck}$, the duty ratio of the first power switch in each balance unit is d (in this embodiment, $d \leq 0.5$); and the switching frequency of the power switche in the balance unit is an odd multiple of that of the basic unit, that is, $f_{buck} = (2p+1) \cdot f_1$, where p=0,1,2,3....

As shown in FIG. 2, the voltage at the common input terminal of the two balance units 1a and 1b is $V_{bus}$, and the output voltage of the power conversion module is $V_{out}$. The voltages $V_{swa}$ and $V_{swb}$ at the common connection nodes of the first power switch and the second power switch in the two balance units change between $V_{bus}$ and 0V (when the first power switch Q211 in the first balance unit is turned on, $V_{swa} = V_{bus}$; when the first power switch Q211 in the first balance unit is turned off, $V_{swa} = 0$. Similarly, when the first power switch Q221 in the second balance unit is turned on, $V_{swb} = V_{bus}$; when the first power switch Q221 in the second balance unit is turned off, $V_{swb} = 0$). When the first power switch Q111 and the third power switch Q113 in the basic unit 11 are turned on, corresponding to the interval [0, $T_1/2$] in FIG. 3, $V_{bus} = V_{in} - V_{C1}$. When the first power switch Q111 and the third power switch Q113 are turned off, that is, in the interval [$T_1/2$, $T_1$], $V_{bus} = V_{C1}$, where $V_{in}$ is the voltage of the external power supply.

As shown in FIG. 3, the duty ratio of the driving signal of the power switch in the basic unit is 0.5, and the duty ratios of the driving signals of the first power switches in each balance unit 1a and 1b are equal. The rising edge of the driving signal G211 of the first power switch Q211 in the first balance unit 1a is aligned with the rising edges of the driving signals G111 and G113 of the first power switch Q111 and the third power switch Q113 in the basic unit 11. The driving signal G221 of the first power switch Q221 in the second balance unit 1b lags 180° behind the driving signal G211 of the first power switch Q211 in the first balance unit 1a, that is, lags $T_{buck}/2$. As such, in the first half switching cycle [0, $T_1/2$] when the first power switch Q111 and the third power switch Q113 in the basic unit 11 are turned on, when the duty ratio d of the driving signal of the first switch in the balance unit is less than and equal to 0.5, the drive signal G211 of the first power switch Q211 in the first balance unit 1a has p+1 high voltage levels and p low voltage levels. The driving signal G221 of the first power switch Q221 in the second balance unit 1b has p high voltage levels and p+1 low voltage levels. During the half switching period [$T_1/2$, $T_1$] when the first power switch Q111 and the third power switch Q113 in the first level structure are turned off, the driving signal G211 of the first power switch Q211 in the first balance unit 1a has p high voltage levels and p+1 low voltage levels, and the driving signal G221 of the first power switch Q221 in the second balance unit 1b has p +1 high voltage levels and p low voltage levels.

When the circuit operates in a steady state, according to the volt-second balance of the inductor, in one switching cycle of the basic unit, that is, in the interval [0, $T_1$], the voltages $V_{swa}$ and $V_{swb}$ at the common terminals of the first power switch and the second power switch in the two balance units satisfy the following equations, where $V_{out}$ is the average value of the output voltage.

$$\frac{1}{T_1} \int_0^{T_1} v_{swa} dt = V_{out} \qquad （1）$$

$$\frac{1}{T_1} \int_0^{T_1} v_{swb} dt = V_{out} \qquad (2)$$

Specifically, the equations (1) and (2) can be converted into:

$$\frac{1}{T_1} [(V_{in} - V_{C1}) \cdot d \cdot T_{buck} \cdot (p + 1) + V_{C1} \cdot d \cdot T_{buck} \cdot p] = V_{out} \quad (3)$$

$$\frac{1}{T_1} [(V_{in} - V_{C1}) \cdot d \cdot T_{buck} \cdot p + V_{C1} \cdot d \cdot T_{buck} \cdot (p + 1)] = V_{out} \quad (4)$$

In addition, when the power conversion module operates in a steady state, in the interval [0, T1/2], the flying capacitor C1 is always charging; in the interval [T1/2, T1], the flying capacitor C1 is always discharging, and the charge and discharge are balanced at steady state. That is, the ampere-second balance equation for the flying capacitor C1 can be written as follows:

$$\int_0^{T_1/2} i_a dt + \int_0^{T_1/2} i_b dt = \int_{T_1/2}^{T_1} i_a dt + \int_{T_1/2}^{T_1} i_b dt \qquad (5)$$

When the duty ratio d of the driving signal of the first power switch in the balance unit is less than and equal to 0.5, according to $i_a$ and $i_b$ in Fig. 3, equation (6) can be obtained.

$$I_{La} \cdot d \cdot T_{buck} \cdot (p + 1) + I_{Lb} \cdot d \cdot T_{buck} \cdot p = I_{La} \cdot d \cdot T_{buck} \cdot p + I_{Lb} \cdot d \cdot T_{buck} \cdot (p + 1)$$

$$(6)$$

wherein $I_{La}$ and $I_{Lb}$ are the average values of the currents flowing through the first inductor $L_a$ and the second inductor $L_b$ in the two balance units respectively.

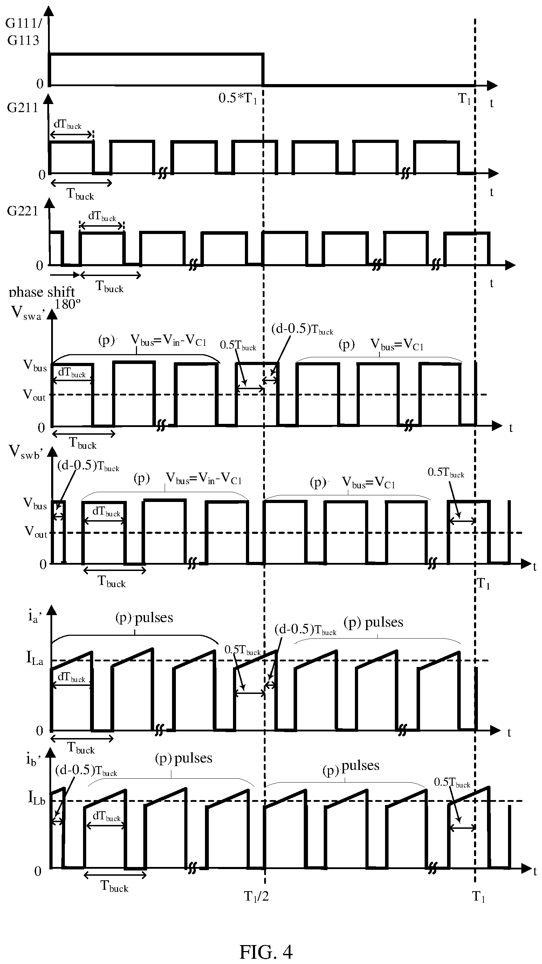

FIG. 4 illustrates the second working waveform schematic of the first power converter. The difference from FIG. 3 is that in this embodiment, the duty ratio of the first power switch in each balance unit is greater than 0.5. When the duty ratio d of the driving signal of the first power switch in the two balance units is greater than 0.5, according to $V_{swa}'$ and $V_{swb}'$ in FIG. 4, the equations (1) and (2) can be transformed into:

$$\frac{1}{T_1} [(V_{in} - V_{C1}) \cdot d \cdot T_{buck} \cdot p + (V_{in} - V_{C1}) \cdot 0.5 \cdot T_{buck} + V_{C1} \cdot d \cdot T_{buck} \cdot p + V_{C1} \cdot$$

$$(d - 0.5) \cdot T_{buck}] = V_{out} \qquad (7)$$

$$\frac{1}{T_1} [(V_{in} - V_{C1}) \cdot d \cdot T_{buck} \cdot p + (V_{in} - V_{C1}) \cdot (d - 0.5) \cdot T_{buck} + V_{C1} \cdot d \cdot T_{buck} \cdot$$

$$p + V_{C1} \cdot 0.5 \cdot T_{buck}] = V_{out} \qquad (8)$$

By combining equations (3) and (4), and combining equations (7) and (8), equation (9) can be obtained. It can be proved accordingly that no matter the duty ratio d of the driving signal of the first power switch of the balance unit is ≤0.5 or >0.5, the voltage $V_{C1}$ of the flying capacitor C1 can be automatically balanced.

$$V_{C1} = \frac{V_{in}}{2} \qquad (9)$$

Similarly, when the duty ratio d of the driving signal of the first power switch in the balance unit is greater than 0.5, according to $i_a'$ and $i_b'$ in FIG. 4, equation (5) can be further transformed into equation (10),

$$I_{La} \cdot d \cdot T_{buck} \cdot p + I_{La} \cdot 0.5 \cdot T_{buck} + I_{Lb} \cdot (d - 0.5) \cdot T_{buck} + I_{Lb} \cdot d \cdot T_{buck} \cdot p =$$
$$I_{La} \cdot (d - 0.5) \cdot T_{buck} + I_{La} \cdot d \cdot T_{buck} \cdot p + I_{Lb} \cdot d \cdot T_{buck} \cdot p + I_{Lb} \cdot 0.5 \cdot T_{buck}$$
$$(10)$$

Equation (11) can be obtained by simplifying equations (6) and (10). It can be proved that no matter the duty ratio of the driving signal of the first power switch in the balance unit is ≤0.5 or >0.5, the output currents of the two balance units are equal. That is, they are automatically equalized.

$$I_{La} = I_{Lb} \qquad (11)$$

It should be noted that when the frequency of the driving signal in the balance unit is an even multiple of that of the driving signal in the basic unit, that is, when $f_{Buck}=2p \cdot f_1$, equations (3) and (4) are identical, equations (7) and (8) are identical, so equation (9) cannot be derived. In the same way, equation (6) and equation (10) are identical, so equation (11) cannot be deduced. That is, it cannot be achieved that the voltage of the flying capacitor can be automatically balanced, and the output currents of each balance unit are automatically equalized.

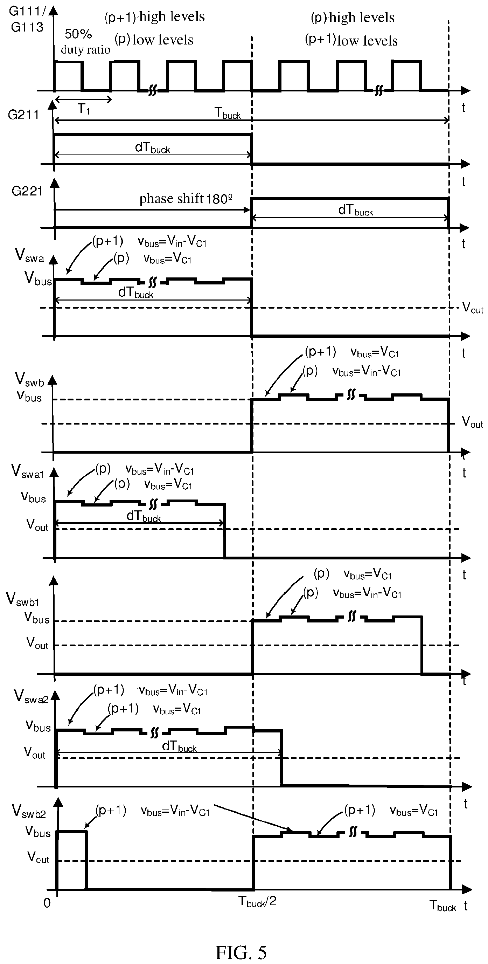

In addition, when the frequency of the driving signal of the power switch in the basic unit is an odd multiple of the frequency of the driving signal in the balance unit, that is, $f_1=(2p+1) \cdot f_{buck}$, where p=0,1,2,3..., the working waveform of the power conversion module is shown in FIG. 5. In the period [0, $T_{buck}$] of the balance unit, when the driving signals G111 and G113, and driving signal G211 or G221 are all high voltage levels, $V_{bus}=V_{in}-V_{C1}$. When the driving signals G111 and G113 are low voltage levels and the driving signal G211 or G221 is high voltage level, $V_{bus}=V_{C1}$. When the duty ratio of the driving signal of the first power switch in the balance unit is d=0.5, the voltages at the common terminals of the two power switches in the two balance units 1a and 1b are shown as $V_{swa}$ and Vswb in FIG. 5. During interval [0, Tbuck/2], the time for $V_{swa}=V_{in}-V_{C1}$ is $(p+1) \cdot T_1/2$, and the time for $V_{swa}=V_{C1}$ is $p \cdot T_1/2$. In the interval [Tbuck/2, Tbuck], the time for $V_{swb}=V_{C1}$ is $(p+1) \cdot T_1/2$, and the time for $V_{swb}=V_{in}-V_{C1}$ is $p \cdot T1/2$. According to the volt-second balance of the first inductor La and the second inductor Lb, the equations (1) and (2) can be obtained to be the same as the equations (3) and (4), and then the equation (9) can be derived. Namely, the voltage balance of the flying capacitors can be achieved automatically. In the case that the duty ratio d of the driving signal of the first power switch in the balance unit is less than 0.5, when the voltages at the common terminals of the two power switches in the two balance units 1a and 1b are shown as $V_{swa1}$ and $V_{swb1}$ in FIG. 5. In a period [0, Tbuck], both $V_{swa1}$ and $V_{swb1}$ are equal to $V_{bus}$, and in this interval, the time for $V_{swa1} = V_{in}-V_{C1}$ is $p \cdot T_1/2$, and the time for $V_{swa1} = V_{C1}$ is $p \cdot T_1/2$, the time for $V_{swb1}=V_{in}-V_{C1}$ is $p \cdot T_1/2$, and the time for $V_{swb1}=V_{C1}$ is $p \cdot T_1/2$. Therefore, the time for $V_{bus}=V_{in}-V_{C1}$ in $V_{swa1}$ and $V_{swb1}$ is equal, both are $p \cdot T_1/2$, and the time for $V_{bus}=V_{C1}$ in $V_{swa1}$ and $V_{swb1}$ is equal, both are $p \cdot T_1/2$. That is, there is a situation where equation (1) and equation (2) are identical, and equation (9) cannot be obtained. Similarly, in the case that the duty ratio d of the driving signal of the first power switch in the balance unit is greater than 0.5, when the voltages at the common terminals of the two s power witches in the two balance units are $V_{swa2}$ and $V_{swb2}$ in FIG. 5, the time for $V_{bus}=V_{in}-V_{C1}$ in $V_{swa2}$ and $V_{swb2}$ is equal, both are $(p+1) T_1/2$, and the time for $V_{bus}=V_{C1}$ in $V_{swa2}$ and $V_{swb2}$ is equal, both are $(p+1) T_1/2$. That is, there will be the situation that equations (1) and (2) are identical. Namely, when the frequency of the driving signal of the power switch in the basic unit is an odd multiple of the frequency of the driving signal in the balance unit, when d ≠ 0.5, the voltage balance of the flying capacitor cannot be automatically achieved.

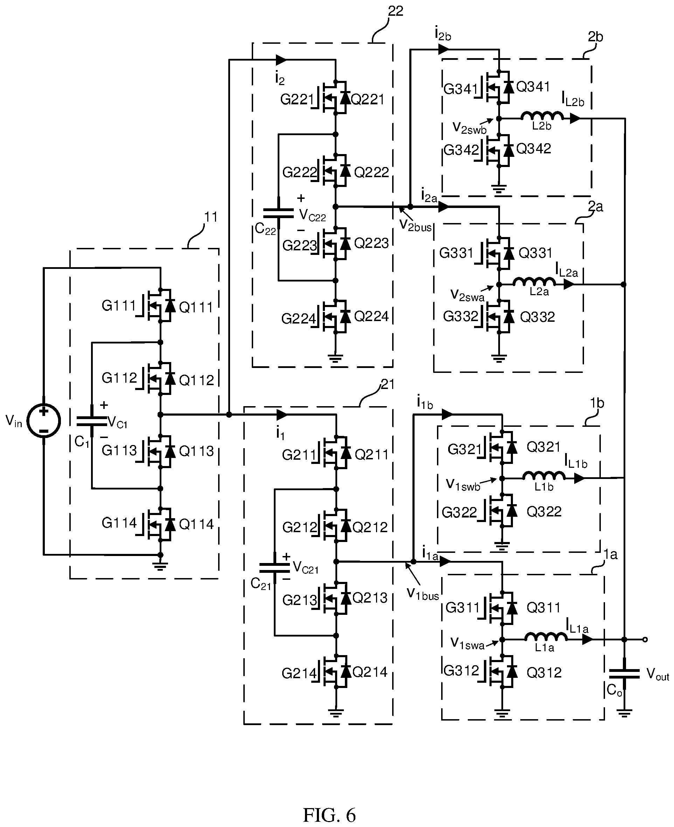

When N=3, the schematic diagram of the structure of the power conversion module is shown in FIG. 6, which includes a three-level structure: the first-level structure includes one basic unit 11, the second-level structure includes two basic units 21 and 22, the third-level structure includes four balance units 1a, 1b, 2a, 2b. The second terminal of the first basic unit 11 in the first-level structure is connected to the first terminals of the first basic unit 21 and the second basic unit 22 in the second-level structure. The second terminal of the first basic unit 21 in the second-level structure is connected to the first terminals of the first balance unit 1a and the second balance unit 1b in the third-level structures. The second terminal of the second basic unit 22 in the second-level structure is connected to the first terminals of the third balance unit 2a and the fourth balance unit 2b in the third-level structure. The first terminal of the first basic unit 11 in the first-level structure is connected to the external power supply as the input terminal of the power conversion module, and the second terminals of each balance unit are connected as the output terminal of the power conversion module.

The composition of each basic unit and the balance unit and the relationship between the driving signals of each power switch in the same basic unit or balance unit are the same as those of the power conversion module with N=2, and the duty ratio of each power switch in each basic unit is 0.5. The first power switches in the two basic units in the next level structure connected to the second terminal of the same basic unit is controlled with a difference phase of 180° (namely, the switching states are complementary; that is, the switching states of the power switches Q211 and Q221 are complementary). The duty ratios of the first power switches in each balance unit are the same, and the first power switches in the two balance units connected to the second terminal of the same basic unit are under phase-shifted control, with a phase difference of 180°.

The switching periods of the power switches in the first-level structure are $T_1$, and the frequency is $f_1=1/T_1$. The switching periods of the power switches in the second-level structure are $T_2$, and the frequency is $f_2=1/T_2$, where $f_2=(2q+1) f_1$, or $f_1=(2q+1) f_2$, where q=0,1,2,3 .... The switching period of each balance unit in the third-level structure is the same as $T_{buck}$, the switching frequency is $f_{buck}=1/T_{buck}$, and the duty ratio of the driving signal of the first power switch in each balance unit is d (0<d<1). The switching frequency $f_{Buck}$ of the power switches in the balance unit in the third-level structure is an odd multiple of the highest switching frequency in all basic units. That is, when $f_2=(2q+1) f_1$, $f_{Buck}=(2p+1)f_2$; when $f_1=(2q+1) f2$, $f_{Buck}=(2p+1) f_1$, where p=0,1,2,3....

It should be noted that if the switching frequency of the power switches in the second-level structure is an even multiple of that of the first-level structure. That is, $f_2=2q \cdot f_1$, where p=0,1,2,3... (or conversely $f_1=2q \cdot f_2$), or if the frequency of the driving signal of the power switches in the balance unit is an even multiple of the highest switching frequency among all the basic units, the power conversion module will not be able to automatically achieve voltage equalization and current equalization.

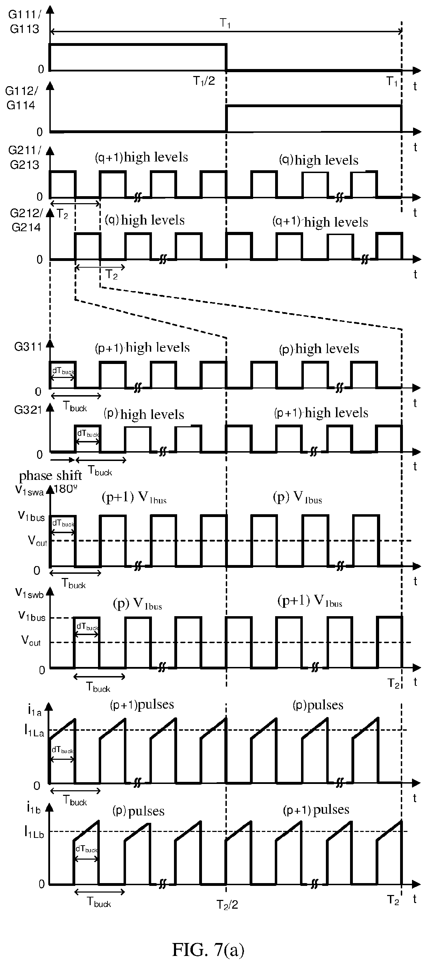

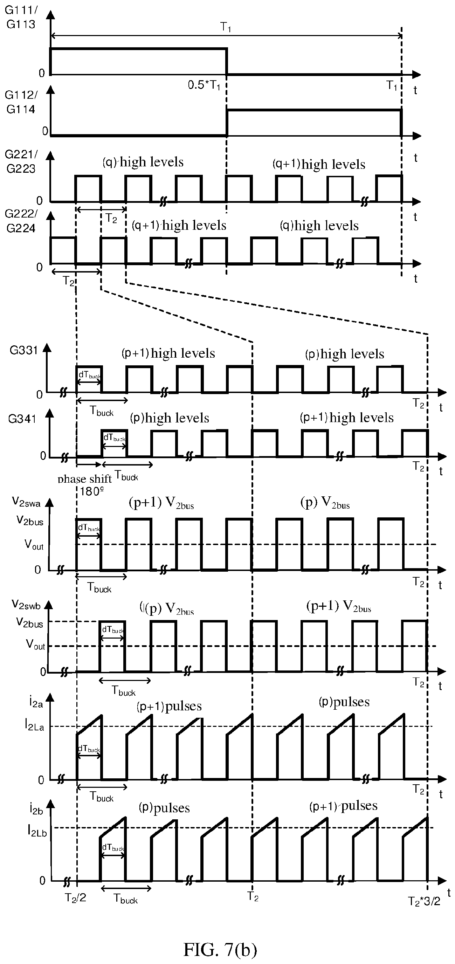

FIG. 7(a) and FIG. 7(b) shows the first working waveform schematic of the second power converter (N=3) according to the embodiment of the present disclosure, where when $f_2=(2q+1) f_1$, q=0,1,2,3 .... The operating principle of the power converter is described below with reference to FIG. 6 and FIG. 7(a) and FIG. 7(b). As shown in FIG. 6, the voltage of the common input terminal of the first balance unit 1a and the second balance unit 1b is $V_{1bus}$, the voltage of the common terminal of the two power switches Q311 and Q312 in the first balance unit is $V_{1swa}$, the voltage of the common terminal of the two power switches Q321 and Q322 in the second balance unit is $V_{1swb}$, and the average output voltage of the power conversion module is $V_{out}$. As shown in FIG. 7(a), when the driving signal G311 of the first power switch Q311 in the first balance unit in the third-level structure is at a high voltage level, the first power switch Q311 is turned on, and thus $V_{1swa}=V_{1bus}$; when the driving signal G311 is at a low voltage level, the first power switch Q311 is turned off, and thus $V_{1swa}=0$. When the driving signal G321 of the first switch Q321 in the second balance unit in the third-level structure is at a high voltage level, the first power switch Q321 is turned on, and thus $V_{1swb}=V_{1bus}$; when the driving signal G321 is at a low voltage level, the first power switch Q321 is turned off, and thus $V_{1swb}=0$. In the interval $[0, T_1/2]$, the driving signals G111 and G113 of the first power switch Q111 and the third power switch Q113 in the first-level structure are at a high voltage level, the first switch Q111 and the third switch Q113 are turned on; and when the driving signals G211 and G213 of the first power switch Q211 and the third power switch Q213 in the first basic unit in the second-level structure are also at a high voltage level, power switches Q211 and Q213 are turned on, so $V_{1bus}=V_{in}-V_{C1}-V_{C21}$ at this time. When the driving signals G111 and G113 of the first switch Q111 and the third switch Q113 in the first-level structure are at low voltage level in the interval $[[T_1/2, T_1]$, and when the driving signals G211 and G213 of the first switch Q211 and the third switch Q213 in the first basic unit in the second-level structure are at high voltage level, power switches Q111 and Q113 are turned off, and power switches Q211 and Q213 are turned on, such that $V_{1bus}=V_{C1}-V_{C21}$. When the driving signals G211 and G213 of the first power switch Q211 and the third power switch Q213 in the first basic unit in the second-level structure are at low voltage level, power switches Q211 and Q213 are turned off, and at this time, $V_{1bus}=V_{C21}$. The voltage of the external power supply connected to the first terminal of the first basic unit 11 in the first-level structure is $V_{in}$.

Similarly, as shown in FIG. 6, the voltage of the common input terminal of the third balance unit 2a and the fourth balance unit 2b is $V_{2bus}$, the voltage of the common terminal of the two power switches Q331 and Q332 in the third balance unit is $V_{2swa}$, and the voltage of the common terminal of the two power switches Q341 and Q342 in the fourth balance unit is $V_{2swb}$. As shown in FIG. 7(b), when the driving signal G331 of the first power switch Q331 in the third balance unit in the third-level structure is at a high voltage level, the first power switch Q331 is turned on, and thus $V_{2swa}=V_{2bus}$; when the driving signal G331 is at a low voltage level, the first power switch Q331 is turned off, and thus $V_{2swa}=0$. When the driving signal G341 of the first power switch Q341 in the fourth balance unit in the third-level structure is at a high voltage level, the first power switch Q341 is turned on, and thus $V_{2swb}=V_{2bus}$. When the driving signal G341 is at a low voltage level, the first power switch Q341 is turned off, and thus $V_{2swb}=0$. When the driving signals G111 and G113 of the first switch Q111 and the third switch Q113 in the first-level structure are at high voltage level, and when the driving signals G221 and G223 of the first power switch Q221 and the third power switch Q223 in the second basic unit in the second-level structure are at a high voltage level, power switches Q111, Q113, Q221 and Q223 are turned on. At this time, $V_{2bus}=V_{in}-V_{C1}-V_{C22}$. When the driving signals G111 and G113 of the first switch Q111 and the third power switch Q113 in the first-level structure are at a low voltage level, and when the driving signals G221 and G223 of the first switch Q221 and the third switch Q223 in the second basic unit in the second-level structure are at a high voltage level, power switches Q111 and Q113 are turned off, and power switches Q221 and Q223 are turned on. At this time, $V_{2bus} = V_{C1} - V_{C22}$. When the driving signals G221 and G223 of the first power switch Q221 and the third power switch Q223 in the second basic unit in the second-level structure are at a low voltage level, switches Q221 and Q223 are turned off, and at this time, $V_{2bus} = V_{C22}$.

In FIG. 7(a) and FIG. 7(b), the rising edges of the driving signal G311 of the first switch Q311 of the first balance unit in the third-level structure, and the rising edges of the driving signal G211 of the first power switch Q211 and the driving signal G213 of the third power switch Q213 of the first basic unit 21 in the second-level structure are preferably aligned with the rising edges of the driving signal G111 of the first switch Q111 and the driving signal G113 of the third power switch Q113 in the basic unit 11 in the first-level structure. The driving signals G221 and G223 of the first switch Q221 and the third switch Q223 in the second basic unit 22 in the second-level structure have a phase difference of 180° with the driving signals G111 and G113. That is, the phase difference is $T_2/2$. The phase difference between the driving signal of the first power switch Q321 of the second balance unit and the driving signal of the first switch G311 of the first balance unit in the third-stage structure is 180°.

When the circuit operates in a steady state, the equations for the volt-second balance of the inductors $L_{1a}$, $L_{1b}$, $L_{2a}$, and $L_{2b}$ in the four balance units can be written respectively as follows:

$$\frac{1}{T_1} \int_0^{T_1} v_{1swa} dt = V_{out} \tag{12}$$

$$\frac{1}{T_1} \int_0^{T_1} v_{1swb} dt = V_{out} \tag{13}$$

$$\frac{1}{T_1} \int_0^{T_1} v_{2swa} dt = V_{out} \tag{14}$$

$$\frac{1}{T_1} \int_0^{T_1} v_{2swb} dt = V_{out} \tag{15}$$

The case where the duty ratio d of the driving signal of the first power switch in each balance unit is less than or equal to 0.5 is described here. With reference to FIG. 7(a), when $f_2 = (2q+1) f_1$, where q=0, 1, 2, 3..., equations (12) and (13) can be transformed into:

$$\frac{1}{T_1} [(V_{in} - V_{C1} - V_{C21}) \cdot d \cdot T_{Buck} \cdot (p + 1) \cdot (q + 1) + (V_{C1} - V_{C21}) \cdot d \cdot T_{Buck} \cdot (p + 1) \cdot q +$$
$$V_{C21} \cdot d \cdot T_{Buck} \cdot p \cdot (2q + 1)] = V_{out} \tag{16}$$

$$\frac{1}{T_1} [(V_{in} - V_{C1} - V_{C21}) \cdot d \cdot T_{Buck} \cdot p \cdot (q + 1) + (V_{C1} - V_{C21}) \cdot d \cdot T_{Buck} \cdot p \cdot q + V_{C21} \cdot d \cdot$$
$$T_{Buck} \cdot (p + 1) \cdot (2q + 1)] = V_{out} \tag{17}$$

Similarly, the equations (14) and (15) can be transformed into:

$$\frac{1}{T_1} [(V_{in} - V_{C1} - V_{C22}) \cdot d \cdot T_{Buck} \cdot (p + 1) \cdot q + (V_{C1} - V_{C22}) \cdot d \cdot T_{Buck} \cdot (p + 1) \cdot (q + 1) +$$
$$V_{C22} \cdot d \cdot T_{Buck} \cdot p \cdot (2q + 1)] = V_{out} \tag{18}$$

$$\frac{1}{T_1}\left[(V_{in} - V_{C1} - V_{C22}) \cdot d \cdot T_{Buck} \cdot p \cdot q + (V_{C1} - V_{C22}) \cdot d \cdot T_{Buck} \cdot p \cdot (q+1) + V_{C22} \cdot d \cdot \right.$$
$$\left. T_{Buck} \cdot (p+1) \cdot (2q+1)\right] = V_{out} \qquad (19)$$

Based on the four equations (16), (17), (18) and (19), the voltage balance of the flying capacitor can be proved. Further, the equation (20) can be obtained by combining the equations (16) and (17), the equation (21) can be obtained by combining the equations (18) and (19), and the equation (22) can be obtained by combining the equations (17) and (18).

$$V_{in} \cdot (q+1) = V_{C1} + V_{C21} \cdot (4q+2) \qquad (20)$$

$$V_{in} \cdot q + V_{C1} = V_{C22} \cdot (4q+2) \qquad (21)$$

$$V_{in} \cdot (p-q) = V_{C1} \cdot (2p+1) - (V_{C21} + V_{C22}) \cdot (2q+1) \qquad (22)$$

The equation (23) can be obtained by combining the equations (20) with (21) and eliminating $V_{C1}$. The equation (24) can be obtained by merging the equation (23) into the equation (22).

$$V_{in} = 2(V_{C21} + V_{C22}) \qquad (23)$$

$$V_{C1} = V_{in}/2 \qquad (24)$$

The equations (25) and (26) can be obtained by merging the equation (24) into the equation (20) and the equation (21).

$$V_{C21} = V_{C1}/2 \qquad (25)$$

$$V_{C22} = V_{C1}/2 \qquad (26)$$

Based on the foregoing description, it can be proved that when $f_2 = (2q+1) f_1$, where q=0,1,2,3..., the flying capacitors $C_1$, $C_{21}$ and $C_{22}$ can achieve voltage balance.

As illustrated below, it can be proved that when $f_2 = (2q+1) f_1$, the output current balance problem of each balance unit is based on the ampere-second balance principle of the flying capacitors. FIG. 7(a) shows the waveform of the currents of the first balance unit 1a and the second balance unit 1b. The input current of the first balance unit 1a is $i_{1a}$, the input current of the second balance unit 1b is $i_{1b}$. The average values of the inductor currents outputted by the first balance unit 1a and the second balance unit 1b are $I_{L1a}$ and $I_{L1b}$, respectively. Similarly, FIG. 7(b) shows the waveform of the currents of the third balance unit 2a and the fourth balance unit 2b. The input currents of the third balance unit 2a and the fourth balance unit 2b are $i_{2a}$ and $i_{2b}$, respectively. The average values of the inductor currents outputted by the third balance unit 2a and the fourth balance unit 2b are $I_{L2a}$ and $I_{L2b}$, respectively.

First, it can be proved that when $f_2 = (2q+1) f_1$, where q=0,1,2,3..., the output currents of the first balance unit 1a and the second balance unit 1b are equal. As shown in FIG. 7(a), in one switching cycle $[0, T_2]$ of the balance unit, the flying capacitor $C_{21}$ is charged in the first half of the switching cycle $[0, T_2/2]$, the flying capacitor $C_{21}$ is discharged in the second half of the switching cycle $[T_2/2, T_2]$, and the charge and discharge are balanced in the steady state. For the flying capacitor $C_{21}$, the ampere-second balance equation can be listed as follows:

$$\int_0^{T_2/2} i_{1a}dt + \int_0^{T_2/2} i_{1b}dt = \int_{T_2/2}^{T_2} i_{1a}dt + \int_{T_2/2}^{T_2} i_{1b}dt \qquad (27)$$

No matter the duty ratio d of the driving signal of the first power switch in the balance unit is >0.5 or ≤0.5, according to the currents $i_{1a}$ and $i_{1b}$ shown in FIG. 7, the equation (27) can be converted into:

$$I_{L1a} \cdot d \cdot T_{Buck} \cdot (p+1) + I_{L1b} \cdot d \cdot T_{Buck} \cdot p = I_{L1a} \cdot d \cdot T_{Buck} \cdot p + I_{L1b} \cdot d \cdot T_{Buck} \cdot (p+1)$$

$$(28)$$

The equation (29) can be obtained by simplifying the equation (28):

$$I_{L1a} = I_{L1b} \qquad (29)$$

Secondly, it can be proved that the output currents of the third balance unit 2a and the fourth balance unit 2b are equal. As shown in FIG. 7(b), when the driving signal of the switch of the second level structure is in one switching cycle $[T_2/2, T_2*3/2]$ , the flying capacitor $C_{22}$ is charged in the first half of the switching cycle $[T_2/2, T_2]$, the flying capacitor $C_{22}$ is discharged in the second half of the switching cycle $[T_2, T_2*3/2]$, and the charge and discharge are balanced in the steady state. For the flying capacitor $C_{22}$, the ampere-second balance equation can be listed as follows:

$$\int_{T_2/2}^{T_2} i_{2a}dt + \int_{T_2/2}^{T_2} i_{2b}dt = \int_{T_2}^{T_2*3/2} i_{2a}dt + \int_{T_2}^{T_2*3/2} i_{2b}dt \qquad (30)$$

No matter the duty ratio d of the driving signal of the first power switch in the balance unit is >0.5 or ≤0.5, the equation (31) can be obtained by bringing the specific expressions of $i_{2a}$ and $i_{2b}$ into the equation (30).

$$I_{L2a} \cdot d \cdot T_{Buck} \cdot (p+1) + I_{L2b} \cdot d \cdot T_{Buck} \cdot p = I_{L2a} \cdot d \cdot T_{Buck} \cdot p + I_{L2b} \cdot d \cdot T_{Buck} \cdot (p+1)$$

$$(31)$$

The equation (32) can be obtained by simplifying the equation (31).

$$I_{L2a} = I_{L2b} \qquad (32)$$

of the driving signal of the power switch of the first level structure 11 is in one switching cycle $[0, T_1]$, the first capacitor $C_1$ is charged in the first half of the switching cycle $[0, T_1/2]$, the first capacitor $C_1$ is discharged in the second half of the switching cycle $[T_1/2, T_1]$, and the charge and discharge are balanced in the steady state. For the first capacitor $C_1$, the ampere-second balance equation can be listed as follows:

$$\int_0^{T_1/2} i_1dt + \int_0^{T_1/2} i_2dt = \int_{T_1/2}^{T_1} i_1dt + \int_{T_1/2}^{T_1} i_2dt \qquad (33)$$

No matter the duty ratio d of the driving signal of the first power switch in the balance unit is >0.5 or ≤0.5, the equation (34) can be obtained by bringing the specific expressions of $i_1$ and $i_2$ into the equation (33).

$$[I_{L1a} \cdot d \cdot T_{Buck} \cdot (p+1) + I_{L1b} \cdot d \cdot T_{Buck} \cdot p] \cdot (q+1)$$

$$+ [I_{L2a} \cdot d \cdot T_{Buck} \cdot (p+1) + I_{L2b} \cdot d \cdot T_{Buck} \cdot p] \cdot q =$$

$$[I_{L1a} \cdot d \cdot T_{Buck} \cdot (p+1) + I_{L1b} \cdot d \cdot T_{Buck} \cdot p] \cdot q + [I_{L2a} \cdot d \cdot T_{Buck} \cdot (p+1) + I_{L2b} \cdot d \cdot T_{Buck} \cdot p] \cdot (q+1) \qquad (34)$$

The equation (35) can be obtained by bringing the equations (29) and (32) into the equation (34).

$$I_{L1a} = I_{L1b} = I_{L2a} = I_{L2b} \qquad (35)$$

Based on the foregoing description, it is proved that when $f_2=(2q+1)\,f_1$, where q=0,1,2,3..., the output currents of each balance unit are equal.

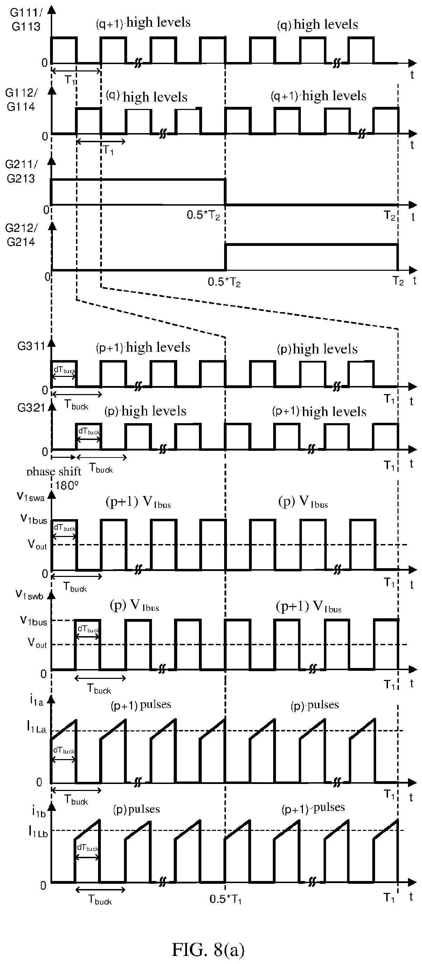

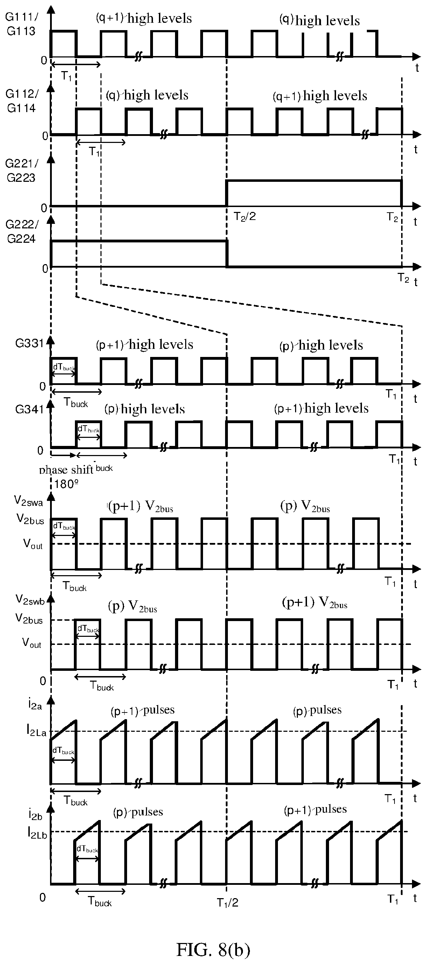

It can be proved as follows that when $f_1=(2q+1)\,f_2$, where q=0,1,2,3..., the voltage of the flying capacitor can be automatically balanced. FIG. 8illustrates the second working waveform diagram of the second power converter according to the embodiment of the present disclosure, where $f_1=(2q+1)\,f_2$, q=0,1,2 ,3.... The operating principle of the power converter is described below with reference to Fig. 6, Fig. 8(a) and Fig. 8(b). FIG. 8(a) is the working waveform of the first balance unit and the second balance unit in the power converter shown in FIG. 6, and FIG. 8(b) is the working waveform of the third balance unit and the fourth balance unit in the power converter shown in FIG. 6.

It can be realized from FIG. 8(a) that in a period of [0, $T_2$], the volt-second balance equations listed for inductors $L_{1a}$ and $L_{1b}$ respectively can be transformed into:

$$\frac{1}{T_2}[(V_{in} - V_{C1} - V_{C21}) \cdot d \cdot T_{Buck} \cdot (p+1) \cdot (q+1) + (V_{C1} - V_{C21}) \cdot d \cdot T_{Buck} \cdot p \cdot q + V_{C21} \cdot d \cdot$$
$$T_{Buck} \cdot ((p+1) \cdot q + p \cdot (q+1))] = V_{out} \qquad (36)$$

$$\frac{1}{T_2}[(V_{in} - V_{C1} - V_{C21}) \cdot d \cdot T_{Buck} \cdot p \cdot (q+1) + (V_{C1} - V_{C21}) \cdot d \cdot T_{Buck} \cdot (p+1) \cdot q + V_{C21} \cdot d \cdot$$
$$T_{Buck} \cdot (p \cdot q + (p+1) \cdot (q+1))] = V_{out} \qquad (37)$$

Similarly, it can be realized from FIG. 8(b) that in a period of [0, $T_2$], the volt-second balance equations listed for inductors $L_{2a}$ and $L_{2b}$ respectively can be transformed into:

$$\frac{1}{T_2}[(V_{in} - V_{C1} - V_{C22}) \cdot d \cdot T_{Buck} \cdot (p+1) \cdot q + (V_{C1} - V_{C22}) \cdot d \cdot T_{Buck} \cdot p \cdot (q+1) + V_{C22} \cdot d \cdot$$
$$T_{Buck} \cdot ((p+1) \cdot (q+1) + p \cdot q] = V_{out} \qquad (38)$$

$$\frac{1}{T_2}[(V_{in} - V_{C1} - V_{C22}) \cdot d \cdot T_{Buck} \cdot p \cdot q + (V_{C1} - V_{C22}) \cdot d \cdot T_{Buck} \cdot (p+1) \cdot (q+1) + V_{C22} \cdot d \cdot$$
$$T_{Buck} \cdot (p \cdot (q+1) + (p+1) \cdot q] = V_{out} \qquad (39)$$

The equation (40) can be obtained by combining the equations (36) and (37), the equation (41) can be obtained by combining the equations (38) and (39), and the equation (42) can be obtained by combining the equations (37) and (38).

$$V_{in} \cdot (q+1) = V_{C1} \cdot (2q+1) + 2V_{C21} \qquad (40)$$

$$V_{in} \cdot q + 2V_{C22} = V_{C1} \cdot (2q+1) \qquad (41)$$

$$V_{in} \cdot p + V_{C21} + V_{C22} = V_{C1} \cdot (2p+1) \qquad (42)$$

The equation (43) can be obtained by combining the equation (40) with the equation (41) and eliminating $V_{C1}$. The equation (44) can be obtained by merging the equation (43) into the equation (42).

$$V_{in} = 2(V_{C21} + V_{C22}) \qquad (43)$$

$$V_{C1} = V_{in}/2 \qquad (44)$$

The equations (25) and (26) can be obtained by bringing the equation (44) into the equations (40) and (41). As such, when $f_1=(2q+1) f_2$, the voltage balance of the flying capacitors $C_1$, $C_{21}$ and $C_{22}$ can be proved.

It can be proved as follows that when $f_1=(2q+1) f_2$, the output currents of each balance unit are equal.

First, it can be proved that the output currents of the first balance unit 1a and the second balance unit 1b are equal. As shown in FIG. 8(a), the charge and discharge balance is achieved in the steady state. No matter the duty ratio d of the driving signal of the first power switch in the balance unit is >0.5 or ≤0.5, according to the currents $i_{1a}$ and $i_{1b}$ shown in FIG. 8(a), the ampere-second balance equation for the flying capacitor $C_{21}$ can be converted into:

$$I_{L1a} \cdot d \cdot T_{Buck} \cdot (p + 1) + I_{L1b} \cdot d \cdot T_{Buck} \cdot p = I_{L1a} \cdot d \cdot T_{Buck} \cdot p + I_{L1b} \cdot d \cdot T_{Buck} \cdot (p + 1)$$

$$(45)$$

The equation (46) can be obtained by simplifying the equation (45).

$$I_{L1a} = I_{L1b} \qquad (46)$$

In addition, based on the same reasons, since the charge and discharge balance is achieved in the steady state, no matter the duty ratio d of the driving signal of the first power switch in the balance unit is >0.5 or ≤0.5, according to the currents $i_{2a}$ and $i_{2b}$ shown in FIG. 8(b), the output currents of the third balance unit 2a and the fourth balance unit 2b are equal, and the ampere-second balance for $C_{22}$ can be obtained as the equation (47).

$$I_{L2a} \cdot d \cdot T_{Buck} \cdot (p + 1) + I_{L2b} \cdot d \cdot T_{Buck} \cdot p = I_{L2a} \cdot d \cdot T_{Buck} \cdot p + I_{L2b} \cdot d \cdot T_{Buck} \cdot (p + 1)$$

$$(47)$$

Then the equation (48) can be obtained by simplifying the equation (47).

$$I_{L2a} = I_{L2b} \qquad (48)$$

of When the driving signal of the power switch of the first level structure is in one switching cycle $[0, T_1]$, the first capacitor $C_1$ is charged in the first half of the switching cycle $[0, T_1/2]$, the first capacitor $C_1$ is discharged in the second half of the switching cycle $[T_1/2, T_1]$, and the charge and discharge are balanced in the steady state. As for the ampere-second balance equation (33) of the first capacitor $C_1$, no matter the duty ratio d of the driving signal of the first power switch in the balance unit is >0.5 or ≤0.5, the equation (49) can be obtained by bringing the specific expressions of the currents $i_{1a}$, $i_{1b}$, $i_{2a}$ and $i_{2b}$ into the equation (33).

$$I_{L1a} \cdot d \cdot T_{Buck} \cdot (p + 1) + I_{L1b} \cdot d \cdot T_{Buck} \cdot p = I_{L2a} \cdot d \cdot T_{Buck} \cdot p + I_{L2b} \cdot d \cdot T_{Buck} \cdot (p + 1)$$

$$(49)$$

Bringing the equations (46) and (48) into the equation (49) can obtain the equation (35). It can be proved that when $f_1=(2q+1) f_2$, the output currents of each balance unit are equal.

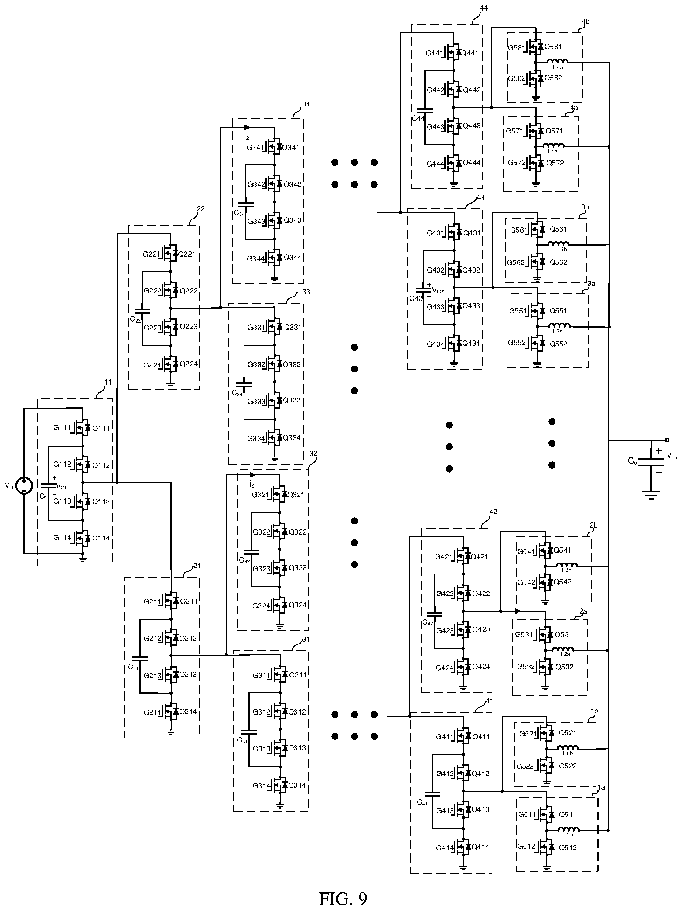

FIG. 9 is a schematic structural diagram of a third power conversion module according to an embodiment of the present disclosure. As shown in FIG. 9, in a more general situation, the power conversion module includes an N-level structure, and the i-th level structure includes $2^{i-1}$ basic units. The second terminal of each basic unit in each level structure is respectively connected with the first terminals of the two basic units in the next level structure. Namely, the output terminal of the m-th basic unit in the previous level structure is connected to the input terminal of the 2m-th basic unit and the (2m-1)-th basic unit in the subsequent level structure. The input terminal of the first basic unit in the first level structure is connected to an external power supply, wherein N is a natural number greater than or equal to 2, i and m are both positive integers, and $1 \leq i \leq N-1$, $1 \leq m \leq 2^{i-1}$. The Nth level structure includes $2^{N-1}$ balance units, and the output terminals of each balance unit are connected as the output terminal of the power conversion module. The second terminals of each basic unit in the (N-1)th level structure are respectively connected to the first terminals of the two balance units in the Nth level structure. That is, the output terminal of the nth basic unit in the (N-1)th level structure is connected to the input terminals of the 2nth balance unit and the (2n-1)th balance unit in the Nth level structure, where n is a positive integer, and $1 \leq n \leq 2^{N-2}$. The two first power switches in the two basic units or balance units in the subsequent structure connected to the second terminal of the same basic unit in the previous structure are under phase-shifted control and the phase difference is 180°. The duty ratio d of the driving signal of the first power switch in each balance unit is equal. The duty ratio of the driving signal of each power switch in the basic units is 0.5. The switching states of the first power switch and the third power switch in each basic unit are the same, and the switching states of the second power switch and the fourth power switch are the same and complementary to the switching state of the first power switch; the switching frequency of the previous basic unit is an odd multiple or an odd fraction of the switching frequency of the subsequent basic unit; the switching frequency of the balance unit is an odd multiple of the highest switching frequency among all basic units. Regarding the first power switch in one basic unit in the previous level structure, and the first power switch in one of the basic unit or the balance unit in the subsequent level structure connected to the basic unit of the first power switch in the previous level structure, the turn-on moments of the two first power switches are the same. Namely, the turn-on moment of the first power switch in the m-th basic unit in the i-th level structure is the same as that of the first switch in the (2m-1)th or 2m-th basic unit in the (i+1)th level structure. When the two first power switches are both turned on at a high voltage level, the timings when the rising edges of the driving signals of the two first power switches are aligned. The output voltage $V_{out}$ of the power conversion module is equal to $d \cdot V_{in}/2^{N-1}$, and the output voltage $V_{out}$ is related to the number of levels N of the power conversion module and the duty ratio d of the driving signal of the first power switch in the balance unit. The output voltage $V_{out}$ is less than the input voltage $V_{in}$. When the duty ratio d is constant, the voltage conversion ratio can be increased more than the 1 Buck circuit with three voltage levels in the prior art. Furthermore, when the level number N is increased, the voltage conversion ratio of the output voltage $V_{out}$ to the input voltage $V_{in}$ can be increased.

It can be deduced from N=2 and N=3 that the power converter of any level N can automatically achieve the voltage balance of the flying capacitors in the basic units of all levels. The voltage of the flying capacitor in the basic unit in the jth-level structure is stabilized at $V_{in}/2^j$, where $V_{in}$ is the input voltage of the first terminal of the power conversion module, j is a natural number, $1 \leq j \leq N-1$. The output current of each balance unit can achieve current sharing. However, with the increase of the level N, the number of power switches increases, and the reliability of the power conversion module will decrease. Therefore, in practical applications, power conversion modules with N=2 and N=3 are more common.

It should be noted that the switching frequency of the basic unit of the previous level can be an odd multiple or an odd fraction of the basic unit of the subsequent level. For each stage, when the switching frequency is increased, the capacitance value of the flying capacitor is decreased. As such, the size and cost of the flying capacitor can be reduced, but it also means that the switching loss increases. On the contrary, decreasing the switching frequency can reduce switching losses, but at the same time the flying capacitors with larger value are required. Therefore, the selection of the switching frequency of each level needs to be considered in association with the actual situation. At the same time, the power switch and capacitor with higher withstand voltage are required in the front level structures compared to those in the rear level structures, so the switching frequency should not be too high in the front level structures and the switching frequency can be higher in the rear level structures.

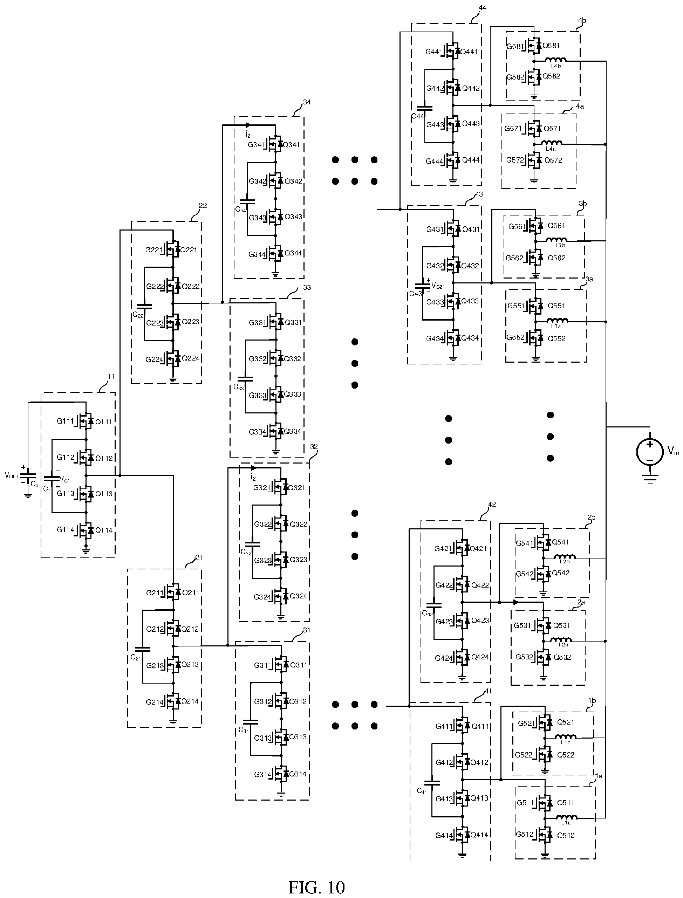

Furthermore, in the above embodiment, the first terminal of the power conversion module is the input terminal to receive the external power supply, and the second terminal is the output end to output the signal. As shown in FIG. 10, when the second terminal of the power conversion module is the input terminal to receive external power supply, the first terminal of the power conversion module is the output terminal to output signals, that is, the input terminal and the output terminal of the power conversion module in the above embodiment are exchanged, the composition of the balance module and the basic unit in the structure of each level remains unchanged, and the relationship between the driving signals of the power switches between the various levels remains unchanged. The only difference is that the currents of each balance unit and each basic unit flow in opposite directions, and the input and output terminals of each balance unit and each basic unit are exchanged. Namely, the balance unit is converted from a Buck circuit to a Boost circuit, the output voltage $V_{out}$ of the first terminal of the converted power conversion module is greater than the voltage $V_{in}$ of the external power supply input at the second terminal, and $V_{out} = 2^{N-1} \cdot V_{in}/(1-d)$.

Moreover, this embodiment also discloses a power converter. The power converter includes a control module and the power conversion module described in the previous embodiment. The control module is used to generate the driving signals for each power switch in the power conversion module, and control the switching states of each power switch in the power conversion module.

Based on the foregoing description, the embodiments of the present disclosure provide a power conversion module. The power conversion module includes N-level structures, and the i-th level structure includes $2^{i-1}$ basic units. The second terminal of each basic unit in each level structure is respectively connected with the first ends of the two basic units in the next level structure. The first terminal of the first basic unit in the first-level structure is used as the first terminal of the power conversion module, wherein N is a natural number greater than or equal to 2, i is a positive integer, and $1 \leq i \leq N-1$. The N-th level structure includes $2^{N-1}$ balance units. The second terminals of each balance unit are connected as the second terminal of the power conversion module. The second terminals of each basic unit in the (N-1)th level structure are respectively connected to the first terminals of the two balance units in the Nth level structure. The basic unit is a switched capacitor circuit. By controlling the switching states of power switches in each of the basic units and the balance units, when the power conversion module operates in a steady state, the voltage of the flying capacitor in the basic unit is substantially stable, and currents flowing through second terminals of each of the balance units are equal. The present disclosure retains the advantages of the three-level Buck DC-DC power converter, such as reducing the withstanding voltage of the power switch, using a smaller power inductor, and improving the power density of the power converter. In addition, the present disclosure does not require additional control strategies to ensure the current equalization of each inductor current, and solves the problem that the voltage balance of the flying capacitors cannot be automatically achieved by the three-level Buck circuit. Further, a higher voltage conversion ratio can be provided without changing the duty ratio of the balance unit.

Embodiments of the present disclosure are described above, and these embodiments do not thoroughly describe all the details, nor do they limit the invention to only the specific embodiments described. Obviously, many modifications and variations are possible according to the above descriptions. This specification selects and specifically describes these embodiments in order to better explain the principle and practical applications of the present disclosure, so that persons skilled in the art can make good use of the present disclosure and modifications based on the present disclosure. The present disclosure is merely limited by the claims and their full scope and equivalents.

## Claims

1. A power conversion module, comprising:

   an N-level structure, wherein an i-th level structure comprises $2^{i-1}$ basic units, a second terminal of each basic unit in each level structure is respectively connected to first terminals of two basic units in a next level structure; a first terminal of a first basic unit in a first-level structure is used as a first terminal of the power conversion module, wherein N is a natural number greater than or equal to 2, i is a positive integer, and $1 \leq i \leq N-1$; wherein an N-th level structure comprises $2^{N-1}$ balance units, wherein second terminals of each balance unit are connected as a second terminal of the power conversion module, and second terminals of each basic unit in an (N-1)th level structure are respectively connected to first terminals of two balance units in the N-th level structure; wherein

   the basic unit is a switched capacitor circuit.

2. The power conversion module according to claim 1, wherein the balance unit comprises: a first power switch and a second power switch connected in series between the first terminal of the balance unit and a reference ground, and an inductor; wherein a common connection node of the first power switch and the second power switch is connected to one terminal of the inductor, and the other terminal of the inductor is connected to the second terminal of the balance unit.

3. The power conversion module according to claim 2, wherein the second switch is replaced by a diode.

4. The power conversion module according to claim 1, wherein the basic unit comprises a first power switch, a second power switch, a third power switch and a fourth power switch, sequentially connected in series between the first terminal of the basic unit and a reference ground and a flying capacitor, wherein the flying capacitor is connected between a first connection node and a second connection node, wherein the first connection node is a common connection node of the first power switch and the second power switch; the second connection node is a common connection node of the third power switch and the fourth power switch; a common connection node of the second power switch and the third power switch is the second terminal of the basic unit.

5. The power conversion module according to claim 4, wherein switching states of the first power switch and the third power switch in each basic unit are the same, and switching states of the second power switch and the fourth power switch are the same and are complementary to the switching state of the first switch.

6. The power conversion module according to any one of claims 1-5, wherein the first terminal of the power conversion module is an input terminal connected to an external power supply, and the second terminal of the power conversion module is an output terminal; or wherein the second terminal of the power conversion module is an input terminal connected to an external power supply, and the first terminal of the power conversion module is an output terminal.

7. A power converter, comprising a control module and the power conversion module of any one of claims 1-6, wherein the control module is used to generate driving signals for each switch in the power conversion module, so as to control switching states of each switch in the power conversion module, and the power conversion module is configured to control switching states of power switches in each of the basic units and the balance units, a voltage across a flying capacitor in each basic unit is substantially stable when the power conversion module is in a steady state, and currents flowing through the second terminals of each of the balance units are equal.

8. The power converter according to claim 7, wherein the first power switches in two balance units connected to the second terminal of the same basic unit in the (N-1)th level structure are under phase-shifted control, with a phase difference of 180°.

9. The power converter according to claim 7, wherein duty ratios of the first power switches in each balance unit are the same.

10. The power converter according to claim 7, wherein the first switches in two basic units that are connected to a second terminal of the same basic unit in the subsequent level structure are under phase-shifted control, with a phase difference of 180°.

11. The power converter according to claim 7, wherein duty ratios of each power switch in each basic unit are 0.5.

12. The power converter according to claim 7, when the power conversion module is in a steady state, a voltage of the flying capacitor in the jth-level structure is stabilized at $V_{in}/2^j$, where $V_{in}$ is a voltage of the first terminal of the power conversion module, j is a natural number, and $1 \leq j \leq N-1$.

13. The power converter according to claim 7, wherein switching frequencies of each switch in the basic units in the adjacent two-level structure satisfy: the switching frequency of the basic unit of previous level is k times or 1/k of the switching frequency of the basic unit of next level, where k is an odd number.

14. The power converter according to claim 7, wherein a switching frequency of each power switch in the balance unit is an odd multiple of the highest switching frequency of the first level to the N-1th level structures.

15. The power converter according to claim 7, wherein turn-on moments of a first power switch in the basic unit in the previous level structure and a first power switch in one of the basic unit or the balance unit in the next level structure connected to the basic unit in the previous level structure are the same.

FIG. 1

FIG. 2

FIG. 3

FIG. 4

FIG. 5

FIG. 6

FIG. 7(a)

FIG. 7(b)

FIG. 8(a)

FIG. 8(b)

FIG. 9

FIG. 10

Europäisches
Patentamt

European
Patent Office

Office européen
des brevets

# EUROPEAN SEARCH REPORT

Application Number

EP 22 19 5639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/112207 A2 (FUTUREWEI TECHNOLOGIES INC [US]) 4 June 2020 (2020-06-04)<br>* abstract *<br>* paragraphs [0077], [0094], [0120]; figures 1-3, 5, 6, 12, 26-29, 31, 33 * | 1-15 | INV.<br>H02M1/00<br>H02M3/07<br>H02M3/158 |
| X | US 2008/239772 A1 (ORAW BRADLEY S [US] ET AL) 2 October 2008 (2008-10-02)<br>* abstract *<br>* paragraphs [0019], [0039]; figure 15 * | 1-15 | |
| A | EP 3 506 479 A1 (SILERGY SEMICONDUCTOR TECHNOLOGY HANGZHOU LTD [CN])<br>3 July 2019 (2019-07-03)<br>* abstract; figure 1 * | 1-15 | |

TECHNICAL FIELDS
SEARCHED      (IPC)

H02M

The present search report has been drawn up for all claims

| Place of search | Date of completion of the search | Examiner |
|---|---|---|
| The Hague | 2 February 2023 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 5639

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2023

| Patent document cited in search report | | Publication date | Patent family member(s) | | Publication date |
|---|---|---|---|---|---|
| WO 2020112207 | A2 | 04-06-2020 | CN 113261190 | A | 13-08-2021 |
| | | | EP 4022756 | A2 | 06-07-2022 |
| | | | US 2022190714 | A1 | 16-06-2022 |
| | | | WO 2020112207 | A2 | 04-06-2020 |
| US 2008239772 | A1 | 02-10-2008 | NONE | | |
| EP 3506479 | A1 | 03-07-2019 | CN 108092513 | A | 29-05-2018 |
| | | | EP 3506479 | A1 | 03-07-2019 |
| | | | TW 201929399 | A | 16-07-2019 |
| | | | US 2019199214 | A1 | 27-06-2019 |
| | | | US 2020099303 | A1 | 26-03-2020 |

EPO FORM P0459

For more details about this annex : see Official Journal of the European Patent Office, No. 12/82